(19) Europäisches Patentamt

European Patent Office

Office européen des brevets

(11) **EP 1 082 851 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(21) Anmeldenummer: **99923487.5**

(22) Anmeldetag: **28.04.1999**

(51) Int Cl.$^7$: **H04N 5/217**, H04N 5/325

(86) Internationale Anmeldenummer:
**PCT/EP99/02886**

(87) Internationale Veröffentlichungsnummer:
**WO 99/62250 (02.12.1999 Gazette 1999/48)**

(54) **VERFAHREN UND VORRICHTUNG ZUR BILDERZEUGUNG BEI DER DIGITALEN DENTALEN RADIOSKOPIE**

METHOD AND DEVICE FOR IMAGING IN DIGITAL DENTAL RADIOSCOPY

PROCEDE ET DISPOSITIF DE PRODUCTION D'IMAGE EN RADIOSCOPIE DENTAIRE NUMERIQUE

(84) Benannte Vertragsstaaten:
**AT BE CH DE FR GB LI**

(30) Priorität: **28.05.1998 DE 19823958**

(43) Veröffentlichungstag der Anmeldung:
**14.03.2001 Patentblatt 2001/11**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **SCHMITT, Peter**
**D-91058 Erlangen (DE)**
• **KOSTKA, Günther**
**D-91056 Erlangen (DE)**
• **HANKE, Randolf**
**D-90766 Fürth (DE)**

(74) Vertreter: **Schoppe, Fritz, Dipl.-Ing.**
**Schoppe, Zimmermann & Stöckeler**
**Patentanwälte Postfach 71 08 67**
**81458 München (DE)**

(56) Entgegenhaltungen:
**DE-A- 19 615 178          US-A- 5 465 284**
**US-A- 5 617 461**

**Beschreibung**

Die vorliegende Erfindung bezieht sich auf Verfahren und Vorrichtungen zur Bilderzeugung bei der digitalen dentalen Radioskopie, und insbesondere auf Verfahren und Vorrichtungen, bei denen Sensorarrays verwendet sind, deren Bildelemente kleiner sind als es für die gewünschte Ortsauflösung erforderlich ist.

Seit längerem sind zahnärztliche Röntgendiagnostikgeräte bekannt, bei denen die Bildgewinnung unter Verwendung von CCD-Sensoren (CCD = charge coupled device = ladungsgekoppeltes Bauelement) auf digitalem Weg erfolgt. Die verwendeten Sensoren bestehen in der Regel aus dem CCD-Sensor selbst und einer direkt auf den CCD-Sensor aufgebrachten Szintillatorschicht, welche die einfallende Röntgenstrahlung in sichtbares Licht umwandelt, das dann in dem darunterliegenden CCD-Sensor eine elektrische Ladung erzeugt. Die Bildinformationen werden dann durch Anlegen geeigneter Taktsignale aus dem CCD-Sensor ausgelesen, vorverarbeitet, digitalisiert und schließlich zur Darstellung und Speicherung auf ein Computersystem, beispielsweise einen Personalcomputer, übertragen. Der Vorteil dieses Verfahrens gegenüber einer herkömmlichen Filmtechnik besteht vor allem in der wesentlich schnelleren Bildgewinnung.

Ein Beispiel solcher Röntgendiagnostikgeräte ist in der DE-A-19615178 beschrieben. Bei dem in dieser Schrift beschriebenen Diagnostikgerät ist ferner eine Korrektureinrichtung vorgesehen, um Schwankungen der elektrischen Signale der einzelnen Elemente des CCD-Arrays aufgrund eines Dunkelstroms derselben, aufgrund eines unterschiedlichen Umwandlungswirkungsgrads derselben und aufgrund von Inhomogenitäten der Szintillatorschicht zu kompensieren.

Die Größe der Bildelemente, die auch als Pixel bezeichnet werden, des CCD-Sensors sind in der Regel der gewünschten Ortsauflösung angepaßt. Ferner können Bildelemente, die kleiner als die gewünschte Ortsauflösung sind, verwendet werden, wobei dann Bildinformationen benachbarter Bildelemente bereits auf dem Sensor zusammengefaßt werden. Diese Vorgehensweise wird als Binning bezeichnet. Dadurch entsteht ein Effektivbildelement, dessen Größe wiederum der gewünschten Ortsauflösung entspricht. Bei der digitalen dentalen Radioskopie wird typischerweise eine Auflösung von 50 µm bis 60 µm gefordert. Eine höhere Auflösung ist in der Regel nicht sinnvoll, da der zur Umwandlung der Röntgenstrahlung in sichtbares Licht erforderliche Szintillator im Regelfall keine höhere Auflösung erlaubt. Es ist zwar möglich, mit besonders dünnen Szintillatorschichten eine höhere Auflösung zu erzielen, was jedoch nachteilig dahingehend ist, daß mit derart dünnen Szintillatorschichten nur ein sehr kleiner Teil der Röntgenstrahlung nachgewiesen werden kann, was durch einen entsprechend niedrigeren Signal-Rausch-Abstand eine schlechtere Bildqualität zur Folge hat.

Die erforderliche Gesamtfläche eines solchen Sensors zur zahnärztlichen Radioskopie beträgt mehrere Quadratzentimeter, da bei einer kleineren Gesamtfläche des Sensors eine Darstellung eines gesamten Zahns auf einem einzigen Röntgenbild schwierig ist. In der Regel orientiert sich die Größe der Sensoren an der Größe gebräuchlicher Zahnfilme, die üblicherweise bei einer Größe von 2 x 3 cm$^2$ beginnt.

Die bekannten Techniken zur zahnärztlichen Radioskopie weisen eine Anzahl von Nachteilen auf. Zum einen ist die Bildqualität der digitalen zahnmedizinischen Röntgenaufnahmen im Regelfall noch ungenügend, da das Bild stark verrauscht ist. Eine Ursache hierfür besteht darin, daß zur Bildgewinnung pro Bildelement nur eine kleine Anzahl von Röntgenquanten beiträgt, da der Patient aus medizinischen Gründen nur einer kleinen Dosis ausgesetzt werden soll, was ein Quantenrauschen zur Folge hat. Neben diesem Quantenrauschen existiert eine zweite Rauschquelle, da die auf den Röntgensensor auftreffende Röntgenstrahlung nur zum Teil von der Szintillatorschicht absorbiert und in sichtbares Licht gewandelt wird, während ein Teil der Röntgenstrahlung die Szintillatorschicht durchtritt und im CCD-Sensor, der vorzugsweise aus Silizium besteht, selbst absorbiert werden kann. Eine derartige Absorption von Röntgenquanten im Silizium des CCD-Sensors wird im folgenden als "direkter Treffer" bezeichnet. Dieser Effekt ist unerwünscht, da in der Szintillatorschicht gewandelte Röntgenquanten nur eine geringe Ladung im CCD-Sensor erzeugen, die typischerweise im Bereich einiger hundert Elektronen liegt. Direkte Treffer hingegen erzeugen eine verglichen dazu sehr große Ladung, typischerweise im Bereich von zehntausenden Elektronen. Ein direkter Treffer erzeugt somit typischerweise 50 mal mehr Ladung als ein im Szintillator gewandeltes Röntgenquant. Somit tragen direkte Treffer sehr stark zum Bildrauschen bei.

Ein weiteres Problem bekannter Sensoren besteht darin, daß es nur in günstigsten Fällen gelingt, Sensoren der genannten geometrischen Größe völlig fehlerfrei herzustellen. Häufig fallen einzelne Bildelemente oder mehrere benachbarte Bildelemente, sogenannte Cluster, oder sogar ganze Zeilen bzw. Spalten des Sensors aus. Dabei treten sowohl Defekte auf, bei denen das defekte Bildelement oder Pixel ohne Belichtung ein großes Bildsignal erzeugt, als auch Defekte, bei denen das defekte Bildelement trotz Belichtung kein Bildsignal erzeugt. Je nach Anzahl und Art derartiger Defekte unterscheidet man verschiedene Sensorqualitäten, die für unterschiedliche Anwendungen geeignet sind. Wenn die Anzahl der Defekte zu groß ist, d.h., wenn die Sensorqualität zu gering ist, kann der Sensor nicht für den Anwendungszweck, d.h. zur dentalen Radioskopie, eingesetzt werden, da dem Zahnarzt durch die defekten Bildelemente möglicherweise wichtige Bildinformationen entgehen. Dies hat jedoch zur Folge, daß ein bedeutender Anteil der produzierten Sensoren nicht eingesetzt werden kann, wodurch der Preis der verwendbaren Sensoren merklich erhöht ist.

Die US-A-5617461 lehrt, unter Verwendung zumindest eines Kalibrierungsbildes ein Defektbild zu erzeugen. Unter Verwendung des Defektbilds wird dann ein von einem Objekt aufgenommenes Bild korrigiert, wobei diese Korrektur durch eine lineare Interpolation stattfindet.

In der US-A-5465284 ist gezeigt, wie eine Mehrzahl von CCD-Sensoren zu einem Bildelement zusammengefügt verarbeitet werden kann. Dadurch wird die Ortsauflösung des Bilds gegenüber der Auflösung des Sensors verringert, während das Signal/Rauschverhältnis verbessert wird.

Ausgehend von dem genannten Stand der Technik besteht die Aufgabe der vorliegenden Erfindung darin, Verfahren und Vorrichtungen zur Bilderzeugung bei der digitalen dentalen Radioskopie zu schaffen, die den Einsatz von in der Herstellung kostengünstigeren Sensorarrays unter Beibehaltung oder Verbesserung der Qualität des erzeugten Bilds ermöglichen.

Diese Aufgabe wird durch Verfahren gemäß den Patentansprüchen 1 und 13 sowie Vorrichtungen gemäß den Patentansprüchen 19 und 26 gelöst.

Die vorliegende Erfindung basiert auf der Erkenntnis, daß es möglich ist, Sensorarrays, deren Bildelemente kleiner sind als die gewünschte Ortsauflösung, selbst dann zur dentalen Radioskopie einzusetzen, wenn einzelne Bildelemente des Sensorarrays defekt sind oder wenn einzelne Bildelemente des Sensorarrays falsche Ausgangssignale liefern. Solche falschen Ausgangssignale einzelner Bildelemente können beispielsweise durch die oben beschriebenen "direkten Treffer" bedingt sein.

Gemäß einem ersten Aspekt schafft die vorliegende Erfindung ein Verfahren zur Bilderzeugung bei der digitalen dentalen Radioskopie unter Verwendung eines Sensorarrays, bei dem eine Mehrzahl von Bildelementen jeweils ein Effektivbildelement bilden, bei dem zunächst basierend auf der Erfassung erster und zweiter Referenzsignale defekte Bildelemente des Sensorarrays bestimmt werden. Bei der nachfolgenden Erfassung des Bilds eines Objekts werden lediglich die als nicht-defekt bestimmten Bildelemente verwendet. Wie oben angegeben, besteht jedes Effektivbildelement aus einer Mehrzahl von Bildelementen, wobei das Ausgangssignal für ein Effektivbildelement beispielsweise durch eine Mittelwertbildung der erfaßten Signale jedes Bildelements dieses Effektivbildelements erzeugt wird. Befinden sich nun unter den Bildelementen defekte Bildelemente, wird erfindungsgemäß das Ausgangssignal für das Effektivbildelement lediglich unter Verwendung der Bildelemente dieses Effektivbildelements erzeugt, die nicht als defekt bestimmt wurden. Somit ist es erfindungsgemäß möglich, Sensorarrays, die defekte Bildelemente aufweisen, ohne wesentliche Qualitätseinbußen des erzeugten Bildes für die dentale Radioskopie einzusetzen.

Bei bevorzugten Ausführungsbeispielen der vorliegenden Erfindung werden defekte Bildelemente bestimmt, indem die jeweiligen Referenzsignale, die für ein bestimmtes Bildelement erfaßt werden, mit einem Schwellenwert verglichen werden, wobei ein Bildelement als defekt bestimmt wird, wenn die Referenzsignale des Bildelements wesentlich von dem Schwellenwert abweichen. Als Schwellenwert kann dabei beispielsweise jeweils der Mittelwert aus den ersten Referenzsignalen aller Bildelemente bzw. der Mittelwert aus den zweiten Referenzsignalen aller Bildelemente verwendet werden.

Gemäß einem zweiten Aspekt schafft die vorliegende Erfindung ein Verfahren zur Bilderzeugung bei der digitalen dentalen Radioskopie unter Verwendung eines Sensorarrays der oben genannten Art, bei dem elektrische Signale, die das Bild eines Objekts darstellen, mittels des Sensorarrays erfaßt werden. Anschließend wird ein für ein jeweiliges Bildelement erfaßtes Signal dahingehend bewertet, ob das Bildelement direkt durch ein Röntgenquant getroffen wurde. Diese Bewertung wird auf der Grundlage von zumindest den zu dem bewertenden Bildelement benachbarten Bildelementen durchgeführt. Vorzugsweise wird das für das zu bewertende Bildelement erfaßte Signal mit einem Mittelwert aus einer Mehrzahl von für benachbarte Bildelemente erfaßten Signalen verglichen, wobei, wenn das für das zu bewertende Bildelement erfaßte Signal um ein vorbestimmtes Maß von dem oben angegebenen Mittelwert abweicht, bewertet wird, daß das Signal einen direkten Treffer des zugehörigen Bildelements durch ein Röntgenquant anzeigt. Beim nachfolgenden Erzeugen des Bilds werden jeweils nur die Ausgangssignale verwendet, die keinen direkten Treffer durch ein Röntgenquant anzeigen. Somit ermöglicht die Erfindung gemäß dem zweiten Aspekt, das durch direkte Treffer verursachte Bildrauschen zu eliminieren oder zumindest stark zu vermindern, wodurch die Bildqualität stark verbessert wird.

Ferner können die beiden oben genannten Aspekte in einem Verfahren zur Bilderzeugung vereinigt sein, so daß das kombinierte verfahren sowohl den Einsatz von Sensoren mit niedriger Qualität, d.h. mit einer großen Zahl von Bildelementdefekten und/oder Spalten- bzw. Zeilen-Defekten, für die digitale dentale Radioskopie erlaubt, als auch die Bildqualität verbessert, indem das durch direkte Treffer verursachte Bildrauschen eliminiert oder stark vermindert wird.

Die vorliegende Erfindung schafft ferner Vorrichtungen, die zur Durchführung der oben beschriebenen Verfahren geeignet sind. Die erfindungsgemäßen Vorrichtungen sind gegenüber herkömmlichen Vorrichtungen zur digitalen dentalen Radioskopie kostengünstig herzustellen, da, wie oben erläutert, auch Sensoren niedriger Qualität in denselben verwendet werden können. Ferner ermöglichen die erfindungsgemäßen Vorrichtungen die Erzeugung qualitativ hochwertigerer Bilder durch das Reduzieren des durch direkte Treffer verursachten Bildrauschens.

Die vorliegende Erfindung ermöglicht somit eine Verbesserung der diagnostischen Aussagekraft von dentalen Röntgenaufnahmen bei einer gleichzeitigen Reduzierung der Herstellungskosten der Bilderzeugungsgeräte durch die Reduzierung der Sensorkosten.

Weiterbildungen der vorliegenden Erfindung sind in den abhängigen Ansprüchen dargelegt.

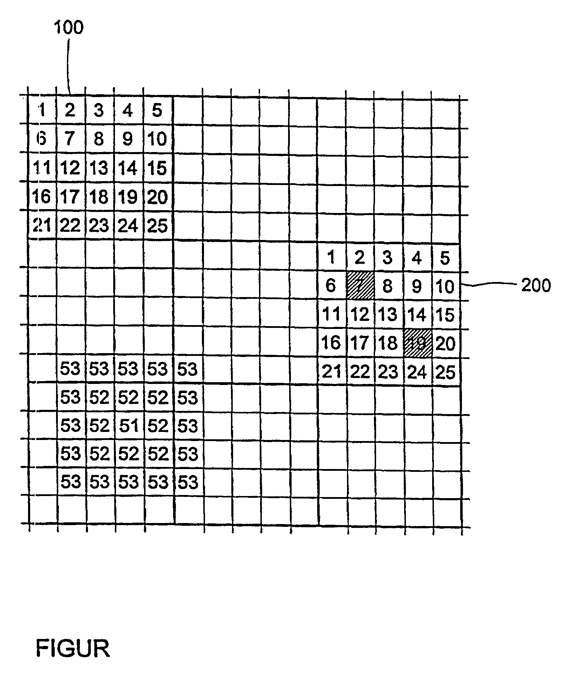

Bevorzugte Ausführungsbeispiele der vorliegenden Anmeldung werden nachfolgend bezugnehmend auf die beiliegende Zeichnung näher erläutert.

Die einzige Figur zeigt schematisch einen Ausschnitt eines Sensorarrays, das zur Durchführung der vorliegenden Erfindung geeignet ist.

Wie bereits oben angegeben ist, wird erfindungsgemäß ein Sensor mit Bildelementen eingesetzt, die deutlich kleiner sind als für die gewünschte Ortsauflösung erforderlich. Ein Ausschnitt eines solchen Sensors ist schematisch in der einzigen Figur der vorliegenden Anmeldung dargestellt. Wie in der Figur gezeigt ist, bildet jeweils eine Mehrzahl von Bildelementen 1 bis 25 ein sogenanntes Effektivbildelement 100. Bei dem in der Figur dargestellten Ausführungsbeispiel wird ein Effektivbildelement jeweils durch 5 x 5 Bildelemente gebildet. Es ist jedoch offensichtlich, daß diese Zahl rein beispielhaft ist, wobei in gleicher Weise andere Aufteilungen denkbar sind. Jedoch ist die Auflösung bei digitalen Röntgensensoren typischerweise auf ca. 50 μm begrenzt, so daß die Seitenlänge eines Effektivbildelements 100 50 μm beträgt. Die einzelnen Bildelemente 1 bis 25 weisen bei dem dargestellten Ausführungsbeispiel somit eine Fläche von jeweils 1.0 μm x 10 μm auf.

Wie bereits oben bezugnehmend auf den Stand der Technik erläutert wurde, werden die Bildinformationen aus den einzelnen Bildelementen durch das Anlegen geeigneter Taktsignale ausgelesen, vorverarbeitet, digitalisiert und schließlich zur Darstellung und Speicherung auf ein Computersystem, beispielsweise einen Personalcomputer, übertragen. Auf diese Weise werden sämtliche Bildelemente ausgelesen.

Erfindungsgemäß wird nun vor der ersten dentalen Röntgenaufnahme ein Bild bei einer homogenen Bestrahlung des Sensors, ein sogenanntes Hellbild, erzeugt und ausgelesen. Nachfolgend wird ein zweites Bild ohne eine Bestrahlung des Sensors, ein sogenanntes Dunkelbild, erzeugt und ausgelesen. In beiden Bildern werden charakteristische Merkmale, beispielsweise ein mittlerer Grauwert, bestimmt, woraufhin alle Bildelemente, deren Ausgangssignale wesentlich von den charakteristischen Merkmalen abweichen, als defekt markiert werden.

Beispielsweise können alle Bildelemente, deren Grauwerte im Dunkelbild einen Grauwert oberhalb eines vorbestimmten Schwellenwertes aufweisen, als defekt markiert werden. In gleicher Weise können alle Bildelemente, die im Hellbild einen Grauwert unterhalb eines vorbestimmten Grauwerts aufweisen, als defekt markiert werden.

Es ist vorteilhaft, ein Dunkelbild bzw. ein Hellbild durch Mittelung mehrerer Aufnahmen ohne Bestrahlung bzw. bei homogener Bestrahlung zu erzeugen. Dadurch kann der Einfluß direkter Treffer, d.h. von Treffern durch nicht umgewandelte Röntgenquanten, und anderer Rauschquellen reduziert werden, wodurch eine Verbesserung des Signal-Rausch-Abstandes erhalten werden kann. Beispielsweise können das endgültige Hellbild bzw. das endgültige Dunkelbild durch eine bildelementweise Mittelung von jeweils beispielsweise 10 Hellbildern bzw. 10 Dunkelbildern erzeugt werden. Bei bevorzugten Ausführungsbeispielen werden dann die mittleren Grauwerte und die zugehörige Standardabweichung in den beiden gemittelten Bildern, d.h. dem endgültigen Hellbild und dem endgültigen Dunkelbild bestimmt. Alle Bildelemente, deren Grauwert im gemittelten Dunkelbild oberhalb einer vorbestimmten Schwelle liegt, oder deren Grauwert im gemittelten Hellbild unter einer vorbestimmten Schwelle liegt, werden als defekt markiert. Bei dem in der Figur gezeigten Ausschnitt eines Sensors sind beispielsweise in dem mit 200 bezeichneten Effektivbildelement zwei Bildelemente 7 und 19 als defekt markiert.

Nach der Bestimmung aller Defektbildelemente werden nun erfindungsgemäß bei nachfolgenden dentalen Röntgenaufnahmen im Rechnersystem durch Mittelwertbildung der Ausgangssignale benachbarter Bildelemente Effektivbildelemente der gewünschten Größe, bedingt durch die geforderte Ortsauflösung, erzeugt. Dabei werden jedoch solche Bildelemente nicht berücksichtigt, die entsprechend der obigen Vorgehensweise als Defektbildelemente klassifiziert wurden. Beispielsweise wird somit zur Erzeugung des den Helligkeitswert des Effektivbildelements 200 anzeigenden Signals eine Mittelwertbildung aller Bildelemente 1 bis 25 mit Ausnahme der Bildelemente 7 und 19 durchgeführt.

Durch die obigen Vorgehensweise ist es möglich, Sensorarrays zur zahnärztlichen Radioskopie zu verwenden, selbst wenn einzelne Bildelemente des Arrays defekt sind. Dadurch kann zum einen die diagnostische Aussagekraft der dentalen Röntgenaufnahmen verbessert werden. Zum anderen können die Herstellungskosten der Sensoren reduziert sein. Die Anzahl von defekten Bildelementen kann nach längerem Einsatz des Sensors durch Strahlenschäden wachsen. Es empfiehlt sich somit, den oben beschriebenen Vorgang, d.h. das Aufnehmen von Dunkel- bzw. Hell-Bildern, periodisch zu wiederholen, beispielsweise jeweils nach 100 Röntgenaufnahmen. Durch diese periodische Wiederholung ist sichergestellt, daß der Sensor auch nach längerem Einsatz fehlerfreie Ausgangssignale liefert. Wie bereits oben erläutert wurde, ist der Einfluß defekter Bildelemente auf das einem Effektivbildelement zugeordnete Ausgangssignal erfindungsgemäß eliminiert, indem die Defektbildelemente bei der Mittelwertbildung für das Effektivbildelement nicht berücksichtigt werden.

Ein zweiter Aspekt der vorliegenden Erfindung, um bei der hochauflösenden zahnärztlichen Radioskopie eine Qualitätsverbesserung eines mittels eines Sensorarrays erfaßten Bilds zu realisieren, besteht darin, das durch direkte Treffer verursachte Bildrauschen zu eliminieren oder zumindest stark zu vermindern. Erfindungsgemäß erfolgt diese Eliminierung des durch direkte Treffer erzeugten Bildrauschanteils in zahnärztlichen Röntgenaufnahmen dadurch, daß die für ein einzelnes Bildelement gespeicherten Informationen mit denjenigen der benachbarten Bildelemente verglichen werden. Da das Licht eines im Szintillator gewandelten Röntgenquants aufgrund der kleinen Bildelemente des CCD-Sensors nicht nur in dem direkt unter dem Wandlungsort liegenden Bildelement nachgewiesen wird, sondern auch in den benachbarten Bildelementen, sollte die Bildinformation in benachbarten Bildelementen in etwa gleich groß sein. Wird jedoch ein Bildelement des CCD-Sensors direkt von einem Röntgenquant getroffen, beinhaltet dieses wesentlich größere Bildinformationen als die benachbarten Bildelemente, die nicht durch ein Röntgenquant getroffen wurden. Somit kann durch einen Vergleich der Bildinformationen dieses Bildelements mit denjenigen der benachbarten Bildelemente ein direkter Treffer detektiert werden. Dabei ist davon auszugehen, daß die Zahl der direkten Treffer auf dem CCD-Sensor so klein ist, daß bei der erforderlichen Bestrahlungszeit, die bei bevorzugten Ausführungsbeispielen etwa 100 ms beträgt, in der Regel nur ein relativ kleiner Teil der Bildelemente betroffen ist. Bildelemente, die als direkt getroffen klassifiziert werden, werden in der nachfolgenden Bildaufbereitung nicht berücksichtigt.

Zur Klassifizierung, ob Bildelemente von Röntgenquanten direkt getroffen wurden, wird nach der Aufnahme eines dentalen Röntgenbildes für jedes Bildelement der Mittelwert aus zumindest benachbarten Bildelementen und den zentralen Bildelementen gebildet. Dabei wäre es z.B. möglich, bei der Klassifizierung des in der Figur mit 51 bezeichneten Bildelements die an dasselbe angrenzenden Bildelemente, die in der Figur jeweils mit 52 bezeichnet sind, zu verwenden. Alternativ wäre es möglich, den Mittelwert aus dem zentralen Bildelement 51 und den umliegenden 24 Bildelementen, jeweils die Bildelemente mit den Bezeichnungen 52 und 53 in der Figur, zu bilden. Nachfolgend wird überprüft, ob die für das zu klassifizierende Bildelement 51 gespeicherten Bildinformationen substantiell von dem gebildeten Mittelwert abweichen. Beispielsweise kann das zu klassifizierende Bildelement als direkt getroffen markiert werden, wenn die denselben zugeordneten Bildinformationen mindestens um den doppelten Wert der Standardabweichung von dem Mittelwert abweichen.

Ein Problem kann darin bestehen, daß die zahl der direkt getroffenen Bildelemente während der erforderlichen Belichtungszeit zu groß ist, d.h., daß zu wenig Bildeiemente für die Signalauswertung verbleiben. In diesem Fall kann die Belichtungszeit in Teilbelichtungszeiten unterteilt werden, indem der Sensor während der Bestrahlung mehrfach ausgelesen wird, so daß die genannte Bedingung, d.h. eine geringe Anzahl von direkten Treffern auf dem CCD-Sensor, für die Teilbilder erfüllt ist. Bei dieser Verwendung von Teilbelichtungszeiten sind jedoch bislang für zahnmedizinische Röntgenaufnahmen eingesetzte CCD-Sensoren weniger geeignet, da während des Auslesens bei gleichzeitiger Bestrahlung die Bildinformationen bei den typischerweise eingesetzten sogenannten Full-Frame-CCD-Sensoren verwischt wird. Bei diesem Typ von CCD-Sensoren werden die Bildinformationen zeilenweise in ein Ausleseregister übertragen und dort ausgelesen, was in der Regel mehrere Zehntelsekunden dauert. Wird während dieses Vorganges weiter bestrahlt, d.h. eine nächste Teilbelichtung durchgeführt, überlagern sich die aktuellen Teilbilder mit den in Richtung des Ausleseregisters verschobenen Teilbildern.

Es ist somit in einem derartigen Fall der Verwendung von Teilbelichtungszeiten vorteilhaft, beispielsweise Photodiodenarrays, bei denen jedes Bildelement direkt ausgelesen werden kann, zu verwenden. Bei diesen Photodiodenarrays ist ein Verwischungseffekt ausgeschlossen. Überdies bietet die Verwendung derartiger Photodiodenarrays zusätzlich den Vorteil, daß diese nicht im integrierenden Modus, d.h. unter Verwendung einer Ladungsmessung, betrieben werden müssen, sondern auch im Strommeßmodus betrieben werden können. Dies ist von Vorteil, da die Belichtungszeit von herkömmlichen CCD-Röntgensensoren durch die Speicherkapazität der Bildelemente begrenzt ist, was wiederum den erreichbaren Signal-Rausch-Abstand und somit letztlich die Bildqualität begrenzt. Dagegen kann der Signal-Rausch-Abstand im Fall eines Photodiodenarrays im Strommeßmodus durch entsprechend häufige Messung des Stroms in jedem Bildeiement verbessert werden.

Im Obigen wurden somit zwei Aspekte der vorliegenden Erfindung beschrieben, die jeweils darauf basieren, solche Bildelemente von der Bildaufbereitung auszunehmen, die keine korrekten ein aufzunehmendes Bild darstellenden Signale liefern. Zu diesem Zweck werden gemäß dem ersten Aspekt defekte Bildelemente von der Bildaufbereitung ausgeschlossen, während gemäß dem zweiten Aspekt solche Bildelemente, die von einem Röntgenquant direkt getroffen wurden, von der Bildaufbereitung ausgenommen werden. Es ist offensichtlich, daß beide obigen Aspekte in einem verfahren kombiniert sein können.

Bei dem kombinierten Verfahren werden zunächst auf die oben beschriebene Art und Weise defekte Bildelemente bestimmt. Wie beschrieben, kann diese Bestimmung vorteilhaft periodisch, beispielsweise jeweils nach 100 Aufnahmen eines Röntgenbildes, wiederholt werden.

Zur Aufnahme eines Röntgenbildes eines Objekts werden zunächst die durch jedes Bildelement erzeugten elektrischen Signale in bekannter Form ausgelesen. Nachfolgend wird ermittelt, welche Bildelemente direkt getroffen wurden. Dies erfolgt in der Weise, daß zunächst der Mittelwert und die Standardabweichung für alle Bildelemente, die ein Effektivbildelement bilden und nicht als defekt markiert sind, ermittelt wird. Beträgt beispielsweise die gewünschte Auflösung 50 μm und die Größe des Bildelements 10 μm, so werden Mittelwert und Standardabweichung, wie oben erläutert, jeweils für 5 x 5 benachbarte Bildelemente gebildet. Die Bildinformationen jedes Bildelements im Effektivbildelement werden nun mit dem betreffenden Mittelwert verglichen. Weichen die Bildinformationen substantiell, beispielsweise zwei Standardabweichungen, in Richtung höherer Werte vom Mittelwert ab, wird das Bildelement als direkt getroffen markiert. Bildelemente, die bei der Aufnahme eines Röntgenbildes als direkt getroffen klassifiziert werden, bleiben bei der Aufbereitung dieser Röntgenaufnahme außer Betracht. In gleicher Weise bleiben, wie oben erläutert wurde, Bildelemente, die als defekt klassifiziert wurden, außer Betracht.

Somit wird zur Erzeugung eines Signals, das die Bildinformationen eines jeweiligen Effektivbildelements anzeigt, die Summe der Bildinformationen aller Bildelemente eines Effektivbildelements gebildet, die keinen direkten Treffer erhalten haben und die nicht als defekt markiert sind. Die sich ergebende Summe wird anschließend mit einem Faktor K gewichtet, d.h. multipliziert. Der Faktor K berechnet sich aus der Anzahl der Bildelemente im Effektivbildelement geteilt durch die Anzahl der nicht direkt getroffenen und nicht defekten Bildelemente im Effektivbildelement. Diese Berechnung wird für jedes Effektivbildelement des Bildes durchgeführt.

Die obige Beschreibung gilt im gleicher Weise, wenn mehrere Teilbilder während der Belichtungszeit integriert werden. Für jedes Teilbild wird wie oben beschrieben vorgegangen, woraufhin alle Teilbilder bildelementweise aufsummiert werden.

Die vorliegende Erfindung schafft somit Verfahren und Vorrichtungen, die die Erzeugung qualitativ hochwertiger Röntgenbilder unter Verwendung eines Bildsensorarrays ermöglicht, das defekte Bildelemente aufweisen kann. Somit kann der Ausschuß bei der Herstellung von Sensorarrays für die dentale Radioskopie stark reduziert werden, was die Kosten für derartige Sensorarrays deutlich verringert. Überdies ermöglicht die vorliegende Erfindung die Aufnahme qualitativ hochwertiger Röntgenbilder, da direkt von Röntgenquanten getroffene Bildelemente bei der Bildaufbereitung nicht berücksichtigt werden. Somit können Bilder mit einem erhöhten Signal/Rausch-Abstand realisiert werden.

Die vorliegende Erfindung kann ohne weiteres mit einem Verfahren zur bildelementweisen Korrektur der elektrischen Signale, die durch jedes Element einer Sensoreinrichtung erzeugt werden, um die Bildqualität zu optimieren, kombiniert werden, wie es beispielsweise in der DE-A-19615178 beschrieben ist.

Um eine solche Korrektur durchzuführen, ist eine Korrektureinrichtung mit der Sensoreinrichtung verbunden, um die elektrischen Signale, die durch das CCD-Array erzeugt werden, zu korrigieren, um Schwankungen der elektrischen Signale, die zusammen ein Bild eines Objekts darstellen, der einzelnen Elemente des CCD-Arrays aufgrund des Dunkelstroms derselben, aufgrund eines unterschiedlichen Wandlungswirkungsgrads derselben und aufgrund von Inhomogenitäten der Szintillatorschicht zu kompensieren. Um diese Kompensation zu erreichen, können die oben beschriebenen Hell- und Dunkel-Signale verwendet werden. Während des Erfassens der Hell- und Dunkel-Signale, die auch als Referenzsignale bezeichnet werden können, und der dem Bild eines Objekts entsprechenden Signale wird die Sensoreinrichtung auf einer konstanten Temperatur gehalten. Dadurch kann der Einfluß der Temperaturabhängigkeit des Dunkelstroms bzw. des Umwandlungswirkungsgrades der einzelnen Bildelemente auf das resultierende Bild beseitigt werden. Durch eine solche Korrekturvorrichtung und das zugehörige Verfahren können trotz einer verringerten Röntgendosis qualitativ hochwertige Bilder erzeugt werden, bei denen eine Verschlechterung der Bildqualität sowohl aufgrund fertigungsbedingter Unterschiede des Dunkelstroms und des Umwandlungswirkungsgrads der einzelnen Bildelemente der Sensoreinrichtung als auch aufgrund von Inhomogenitäten der Szintillatorschicht verhindert ist.

Gemäß dem ersten Aspekt bzw. einer Kombination des ersten und des zweiten Aspekts der vorliegenden Erfindung können das erzeugte Hell- bzw. Dunkel-Bild als Referenzsignale für dieses Korrekturverfahren verwendet werden. Ist nur der zweite Aspekt der vorliegenden Erfindung realisiert, müssen die für das Korrekturverfahren notwendigen Referenzsignale separat erzeugt werden.

Im folgenden wird ein Ausführungsbeispiel eines solchen Korrekturverfahrens detailliert erläutert.

Wie oben angegeben ist, können fertigungsbedingte Unterschiede sowohl das Dunkelsignal eines Bildelements, d.h. den Grauwert des Pixels ohne eine Bestrahlung, als auch den Umwandlungswirkungsgrad bei einer vorgegebenen Bestrahlung, d.h. den Grauwert des Pixels bei der vorgegebenen Bestrahlung, beeinflussen. Das von CCD-Sensoren erzeugte elektrische Signal hängt weitgehend linear von der Beleuchtungsstärke ab. Der digitale Grauwert $Gw_{ij}$ eines Pixels in einer Zeile i und einer Spalte j eines Sensor-Arrays kann bei vorgegebener Bestrahlungsstärke daher durch die folgende Gleichung beschrieben werden:

$$Gw_{ij}(I) = O_{ij} + G_{ij}I \qquad (1)$$

wobei $Gw_{ij}$ der Grauwert ist, $O_{ij}$ der Versatz (der Offset) ist, der durch das Dunkelsignal bewirkt wird, $G_{ij}$ der Gewinn (Gain) ist, und I die Intensität der Bestrahlung ist. $O_{ij}$ und $G_{ij}$ können sich von Pixel zu Pixel unterscheiden.

Ein weiteres Problem folgt aus der Tatsache,

daß der Versatz $O_{ij}$ stark temperaturabhängig ist, wodurch der Grauwert eines Bildelements nicht nur von der Strahlungsstärke, sondern ferner von der Temperatur abhängt:

$$Gw_{ij}(T,I)=O_{ij}(T)+G_{ij}I \qquad (2)$$

Zur Korrektur des Festmusterrauschens (fixed pattern noise) für eine fest vorgegebene Temperatur T werden für jedes Pixel, d.h. für jedes Sensorelement des Sensor-Arrays, die Werte für $O_{ij}$ und $G_{ij}$ bestimmt. Zur Bestimmung derselben werden zwei Bilder benötigt: ein Bild ohne Bestrahlung sowie ein Bild bei einer bekannten Bestrahlung. Die bekannte Bestrahlung kann beispielsweise die maximal zulässige Bestrahlung sein.

Diese Bilder bei fehlender Bestrahlung und einer bekannten Bestrahlung werden zur Unterdrückung des quantenbedingten Bildrauschens vorteilhafterweise durch Mittelung mehrerer Aufnahmen unter konstanten Bedingungen erzeugt. Aus den vorzugsweise gemittelten Bildern sind somit für jedes Bildelement der Grauwert ohne bzw. mit bekannter Bestrahlung I* bekannt:

$$Gw_{ij}(T,I=0)=O_{ij}(T) \qquad (3)$$

$$Gw_{ij}(T,I=I^*)=O_{ij}(T)+G_{ij}I^* \qquad (4)$$

$Gw_{ij}(T,I=0)$ ist der Grauwert des Pixels in der Zeile i und der Spalte j des Sensors, wenn die Sensoreinrichtung keiner Röntgenstrahlung durch eine Röntgenstrahlungsquelle ausgesetzt ist. Dieser Grauwert entspricht dem temperaturabhängigen Versatz $O_{ij}(T)$ des Pixels. $Gw_{ij}(T,I=I^*)$ ist der Grauwert des Pixels bei einer Röntgenstrahlung mit der Intensität I*. Dieser Grauwert setzt sich aus dem Versatz $O_{ij}$ und der Intensität I* mal dem Gewinn $G_{ij}$ des Pixels zusammen.

Durch eine pixelweise Subtraktion der Gleichung 4 minus die Gleichung 3 erhält man den Grauwert des Pixels ohne Versatzanteile:

$$Gw'_{ij}(T,I=I^*)=Gw_{ij}(T,I=I^*)-Gw_{ij}(T,I=0)=G_{ij}I^* \qquad (5)$$

Um mittels eines Sensor-Arrays ein qualitativ hochwertiges Bild zu erzeugen, müssen alle Pixel, d.h. Sensorelemente, des Arrays denselben Grauwert $Gw_{max}$ aufweisen, wenn sie mit derselben maximal zulässigen Dosis bestrahlt werden. Unterschiede in der Empfindlichkeit können durch eine Normierung der Werte $G_{ij}$ beseitigt werden. Aus der Gleichung

$$Gw_{max}=Gw'_{ij}(T,I=I^*)G_{ij}' \qquad (6)$$

kann der normierte Gewinn $G_{ij}'$ für jedes Pixel berechnet werden. $Gw_{max}$ stellt dabei einen Soll-Wert bei einer maximalen Bestrahlung dar, den sämtliche Pixel des Sensor-Arrays aufweisen sollen. Der Korrekturwert $G_{ij}'$ gibt somit einen Faktor an, mit dem der Grauwert jedes Pixels multipliziert werden muß, damit für jedes Pixel bei einer einheitlichen Bestrahlung aller Sensorelemente der gleiche Grauwert ausgegeben wird.

Die Korrektur eines durch die Grauwerte $Gw_{ij}$ charakterisierten Bildes erfolgt wie folgt: die korrigierten Grauwerte $Gw'_{ij}$ ergeben sich durch pixelweise Subtraktion der Versatzwerte $O_{ij}$ jedes Pixels von den ein Bild darstellenden Grauwerten jedes Pixels und die anschließende pixelweise Multiplikation mit den Gewinn-Normierungswerten $G_{ij}'$.

$$Gw'_{ij}=(Gw_{ij}-O_{ij})G_{ij}' \qquad (7)$$

Die Gleichungen (1) bis (7) stellen die Grundlage für das Korrekturverfahren zur Verbesserung der Bildqualität dar. Diese Gleichungen können zur pixelweisen Gewinn- und Versatz-Korrektur im Bereich der zahnärztlichen digitalen Radiographie verwendet werden.

Wie oben bereits dargelegt wurde, sind die Versatzwerte $O_{ij}$ und damit auch die Gewinn-Normierungswerte $G_{ij}'$ stark temperaturabhängig. Werden die Versatzwerte und die Gewinn-Normierungswerte bei einer bestimmten Temperatur ermittelt, das zu korrigierende Bild jedoch bei einer anderen Temperatur aufgenommen, so wird die Bildqualität nicht verbessert, sondern vielmehr mit großer Wahrscheinlichkeit verschlechtert. Aus diesem Grund muß die Temperatur des CCD-Sensors während der Erfassung der Referenzsignale und der Erfassung der ein Bild darstellenden Signale konstant gehalten werden. Eine konstante Sensortemperatur ist auf unterschiedliche Arten realisierbar.

Der CCD-Sensor kann auf der Rückseite mit einem Heizelement versehen werden, wobei die Temperatur des Sensors durch eine aktive Regelung konstant gehalten wird. Zur Messung der Temperatur können beispielsweise Temperatursensoren zusätzlich auf den Träger des CCD-Sensors aufgebracht sein oder auch in dem CCD-Sensor integriert sein. Falls auf dem Sensor unbelichtete CCD-Elemente, sogenannte "dark reference pixel", aufgebracht sind, können diese Elemente aufgrund der starken Temperaturabhängigkeit des Dunkelstroms zur Temperaturmessung herangezogen werden.

Ferner kann die Temperatur gegebenenfalls durch eine Steuerung der Taktfrequenz des CCD-Sensors gesteuert werden. Auch in diesem Fall kann die Temperatur der Sensoreinrichtung beispielsweise mittels Temperatursensoren, die zusätzlich auf den Träger des CCD-Sensors aufgebracht sind, erfaßt werden, um eine geregelte Steuerung der Temperatur der Sensoreinrichtung zu ermöglichen.

Bei intraoralen Röntgendiagnostikeinrichtungen kann das Sensorelement zwischen zwei Röntgenaufnahmen beispielsweise in einem Wasserbad auf einer vorbestimmten Temperatur gehalten werden. Diese vorbestimmte Temperatur kann beispielsweise die Körpertemperatur sein. Dadurch ist gewährleistet, daß das Sensorelement zwischen den Röntgenaufnahmen nicht abkühlt.

Eine weitere wesentliche Voraussetzung für den erfolgreichen Einsatz der Verstärkungs-/Versatz-Korrektur besteht darin, daß die relative Position der Sensoreinrichtung gegenüber der Röntgenstrahlungsquelle konstant ist, oder daß zumindest gewährleistet ist, daß die Röntgendosisleistung über die gesamte Sensorfläche konstant ist, um einen Abfall der Bildhelligkeit zum Bildrand hin, ein sogenanntes "Shading", zu vermeiden. Weist die Sensoreinrichtung bezüglich der Röntgenstrahlungsquelle keine konstante Bestrahlungsgeometrie auf, wird die Gewinnkorrektur nicht korrekt durchgeführt, wodurch ein künstliches Schattieren (shading) erzeugt wird. Zur Vermeidung dieser Problematik kann beispielsweise eine einem Filmhalter analoge Anordnung, bei der die Mitte des CCD-Sensors vom Zentralstrahl der Röntgenstrahlungsquelle getroffen wird, verwendet werden.

Das Korrekturverfahren schafft somit eine Optimierung der Bildqualität im Bereich der digitalen dentalen Radiographie durch die Verwendung einer pixelweisen Gewinn- und Versatz-Korrektur bei einer konstanten Temperatur der Sensoreinrichtung. Die pixelweise Gewinn-/Versatz-Korrektur beseitigt sowohl die Folgen fertigungsbedingter Unterschiede in Dunkelstrom und Wandlungseffizienz der einzelnen Bildelemente, als auch die Folgen von Inhomogenitäten in der auf dem CCD-Sensor aufgebrachten Szintillatorschicht. Eine Voraussetzung für die Verbesserung der Bildqualität durch eine pixelweise Gewinn-/Versatz-Korrektur sind (a) eine konstante Temperatur des CCD-Sensors und (b) eine konstante Bestrahlungsgeometrie oder eine homogene Bestrahlung.

Somit ermöglicht das beschriebene Korrekturverfahren zusammen mit den Verfahren gemäß der vorliegenden Erfindung die Erzeugung qualitativ noch hochwertigerer Bilder selbst mit gegenüber üblicherweise verwendeten Röntgenstrahlungsdosen geringen Bestrahlungsintensitäten.

Wie bereits ausgeführt, kann anstelle des beschriebenen CCD-Arrays auch ein Photodiodenarray oder ein charge-injection-device oder ein CMOS-Bildsensorarray verwendet werden.

**Patentansprüche**

1. Verfahren zur Bilderzeugung bei der digitalen dentalen Radioskopie unter Verwendung eines Sensorarrays, dessen einzelne Bildelemente (1 bis 25, 51, 52, 53) kleiner sind als eine gewünschte Ortsauflösung, so daß eine Mehrzahl von Bildelementen (1 bis 25) jeweils ein Effektivbildelement (100, 200) bilden, mit folgenden Schritten:

   a) Erfassen erster Referenzsignale, die durch die Bildelemente des Sensorarrays erzeugt werden, wenn das Sensorarray keiner Röntgenstrahlung ausgesetzt wird;

   b) Erfassen zweiter Referenzsignale, die durch die Bildelemente des Sensorarrays erzeugt werden, wenn das Sensorarray einer Röntgenstrahlung ausgesetzt wird;

   c) Bestimmen defekter Bildelemente (7, 19) auf der Grundlage der erfaßten ersten und zweiten Referenzsignale; und

   d) Erfassen dritter elektrischer Signale, die durch die Bildelemente des Sensorarrays erzeugt werden, wenn das Sensorarray einer ein Bild eines Objekts darstellenden Röntgenstrahlung ausgesetzt ist; und

   e) Erzeugen des Bilds durch Bilden eines jeweiligen Ausgangssignals für die jeweiligen Effektivbildelemente (100, 200) unter Verwendung jeweils nur der dritten elektrischen Signale, die durch Bildelemente des Effektivbildelements erzeugt werden, die nicht als defekt bestimmt wurden.

2. Verfahren nach Anspruch 1, bei dem im Schritt c) solche Bildelemente als defekt bestimmt werden, deren erstes Referenzsignal einen ersten Schwellenwert um ein vorbestimmtes Maß überschreitet, oder deren zweites Referenzsignal einen zweiten Schwellenwert um ein vorbestimmtes Maß unterschreitet.

3. Verfahren gemäß Anspruch 2, bei dem der erste vorbestimmte Schwellenwert durch eine Mittelwertbildung aus allen ersten Referenzsignalen gebildet wird, und bei dem der zweite vorbestimmte Schwellenwert durch eine Mittelwertbildung aus allen zweiten Referenzsignalen gebildet wird.

4. Verfahren gemäß Anspruch 3, bei dem der erste vorbestimmte Schwellenwert und der zweite vorbestimmte Schwellenwert jeweils durch eine Mittelwertbildung von während einer wiederholten Durchführung der Schritte a) und b) erhaltenen ersten und zweiten Referenzsignalen gebildet wird.

5. Verfahren gemäß einem der Ansprüche 1 bis 4, bei dem die Schritte a), b) und c) jeweils periodisch durchgeführt werden, nachdem die Schritte d) und e) für eine bestimmte Anzahl von Malen durchgeführt wurde.

6. Verfahren gemäß Anspruch 1, bei dem das Ausgangssignal für ein jeweiliges Effektivbildelement (100, 200) durch eine Mittelwertbildung der dritten elektrischen Signale der Bildelemente des Effektivbildelements gebildet wird.

7. Verfahren gemäß Anspruch 1, bei dem nach dem Schritt d) ferner ein Schritt d1) des Bewertens, ob ein für ein jeweiliges Bildelement erfaßtes drittes Signal anzeigt, daß das Bildelement direkt durch ein Röntgenquant getroffen wurde, auf der Grundlage zumindest für benachbarte Bildelemente erfaßter dritter Signale, durchgeführt wird; und bei dem im Schritt e) jeweils nur die dritten elektrischen Signale verwendet werden, die nicht als defekt bestimmt wurden, und deren Bewertung ergab, daß sie nicht von einem Röntgenquant direkt getroffen wurden.

8. Verfahren gemäß Anspruch 7, bei dem im Schritt d1) ein Bildelement als von einem Röntgenquant direkt getroffen bewertet wird, wenn das für dieses Bildelement erfaßte dritte Signal um ein vorbestimmtes Maß von einem Mittelwert der zumindest den benachbarten Bildelementen zugeordneten dritten Signalen abweicht.

9. Verfahren gemäß Anspruch 8, bei dem ein Bildelement (51) als von einem Röntgenquant direkt getroffen bewertet wird, wenn das für dieses Bildelement erfaßte dritte Signal um ein vorbestimmtes Maß von einem Mittelwert aller dritten Signale, die an dieses Bildelement (51) angrenzenden Nachbarbildelementen (52) zugeordnet sind, oder von einem Mittelwert aller dritten Signale, die den Nachbarbildelementen (52) und den an die Nachbarbildelemente angrenzenden Bildelementen (53) zugeordnet sind, abweicht.

10. Verfahren gemäß einem der Ansprüche 7 bis 9, bei dem im Schritt d) zeitlich aufeinanderfolgend dritte elektrische Teilsignale mit einer kurzen Belichtungszeit erzeugt werden, die zu den jeweiligen dritten elektrischen Signalen zusammengesetzt werden, wobei der Schritt d1) jeweils für die dritten elektrischen Teilsignale durchgeführt wird.

11. Verfahren gemäß einem der Ansprüche 1 bis 10, bei dem das Sensorarray während der Schritte a), b) und d) auf eine konstante Temperatur gesteuert wird, und das ferner folgenden Schritt aufweist: Korrigieren der dritten elektrischen Signale auf der Grundlage der ersten und zweiten Referenzsignale, um Schwankungen der dritten elektrischen Signale der einzelnen Bildelemente aufgrund des Dunkelstroms derselben, aufgrund eines unterschiedlichen Umwandlungswirkungsgrads derselben und aufgrund von Inhomogenitäten einer auf das Sensorarray aufgebrachten Szintillatorschicht zu kompensieren.

12. Verfahren gemäß einem der Ansprüche 1 bis 11, bei dem das Sensorarry im Schritt b) einer homogenen Röntgenstrahlung ausgesetzt wird.

13. Verfahren zur Bilderzeugung bei der digitalen dentalen Radioskopie unter Verwendung eines Sensorarrays, auf das eine Szintillatorschicht aufgebracht ist, wobei die einzelnen Bildelemente (1 bis 25, 51, 52, 53) des Sensorarrays kleiner sind als eine gewünschte Ortsauflösung, so daß eine Mehrzahl von Bildelementen (1 bis 25) jeweils ein Effektivbildelement (100, 200) bilden, mit folgenden Schritten:

a) Erfassen von elektrischen Signalen, die durch die Bildelemente des Sensorarrays erzeugt werden, wenn das Sensorarray einer ein Bild eines Objekts darstellenden Röntgenstrahlung ausgesetzt wird;

b) Bewerten, ob ein für ein jeweiliges Bildelement (51) erfaßtes Signal anzeigt, daß das Bildelement direkt durch ein Röntgenquant getroffen wurde, auf der Grundlage von zumindest für benachbarte Bildelemente (52, 53) erfaßten Signalen; und

c) Erzeugen eines Bilds des Objekts durch Bilden eines jeweiligen Ausgangssignals für die jeweiligen Effektivbildelemente (100, 200) auf der Grundlage nur der den Bildelementen des jeweiligen Effektivbildelements zugeordneten elektrischen Signalen, die als nicht direkt von einem Röntgenquant getroffen beurteilt wurden.

14. Verfahren gemäß Anspruch 13, bei dem im Schritt b) ein Bildelement als von einem Röntgenquant direkt getroffen bewertet wird, wenn das für dieses Bildelement erfaßte Signal um ein vorbestimmtes Maß von einem Mittelwert der zumindest den benachbarten Bildelementen zugeordneten erfaßten elektrischen Signalen abweicht.

15. Verfahren gemäß Anspruch 14, bei dem ein Bildelement (51) als von einem Röntgenquant direkt getroffen bewertet wird, wenn das für dieses Bildelement erfaßte dritte Signal um ein vorbestimmtes Maß von einem Mittelwert aller dritten Signale, die an dieses Bildelement (51) angrenzenden Nachbarbildelementen (52) zugeordnet sind, oder von einem Mittelwert aller dritten Signale, die den Nachbarbildelementen (52) und den an die Nachbarbildelemente angrenzenden Bildelementen (53) zugeordnet sind, abweicht.

16. Verfahren gemäß einem der Ansprüche 13 bis 15, bei dem im Schritt a) zeitlich aufeinanderfolgend elektrische Teilsignale unter Verwendung einer Teilbildbelichtungszeit erzeugt werden, die zu den jeweiligen dritten elektrischen Signalen zusammengesetzt werden, wobei der Schritt b) jeweils für die dritten elektrischen Teilsigna.le durchgeführt wird.

17. Verfahren gemäß einem der Ansprüche 13 bis 16, das vor dem Schritt a) folgende Schritte aufweist:

a') Erfassen erster Referenzsignale, die durch die Bildelemente des Sensorarrays erzeugt werden, wenn das Sensorarray keiner Röntgenstrahlung ausgesetzt wird;

a'') Erfassen zweiter Referenzsignale, die durch die Bildelemente des Sensorarrays erzeugt werden, wenn das Sensorarray einer Röntgenstrahlung ausgesetzt wird;

wobei das Sensorarray während der Schritte a'), a'') und a) auf eine konstante Temperatur gesteuert wird; und
wobei die im Schritt a) erfaßten elektrischen Signale auf der Grundlage der ersten und zweiten Referenzsignale korrigiert werden, um Schwankungen der erfaßten elektrischen Signale der einzelnen Bildelemente aufgrund des Dunkelstroms derselben, aufgrund eines unterschiedlichen Umwandlungswirkungsgrads derselben und aufgrund von Inhomogenitäten einer auf das Sensorarray aufgebrachten Szintillatorschicht zu kompensieren.

18. Verfahren gemäß Anspruch 17, bei dem das Sensorarray im Schritt a'') einer homogenen Röntgenstrahlung ausgesetzt wird.

19. Vorrichtung zur digitalen dentalen Radioskopie mit folgenden Merkmalen:

einer Röntgenstrahlungsquelle;

einem Sensorarray, auf das eine Szintillatorschicht aufgebracht ist; und

einer Einrichtung zum Bestimmen defekter Bildelemente auf der Grundlage erster Referenzsignale, die mittels des Sensorarrays erfaßt werden, wenn das Sensorarray keiner Röntgenstrahlung ausgesetzt ist, und auf der Grundlage zweiter Referenzsignale, die erfaßt werden, wenn das Sensorarray einer Röntgenstrahlung ausgesetzt ist,

**dadurch gekennzeichnet, daß**

die einzelnen Bildelemente (1 bis 25, 51, 52, 53) des Sensorarrays kleiner sind als eine gewünschte Ortsauflösung, so daß eine Mehrzahl von Bildelementen (1 bis 25) jeweils ein Effektivbildelement bildet, und

daß eine Einrichtung zum Erzeugen eines Bilds durch das Erzeugen eines Ausgangssignals für ein jeweiliges Effektivbildelement unter Verwendung lediglich von als nicht defekt bestimmten Bildelementen stammenden Objektsignalen vorgesehen ist.

20. Vorrichtung gemäß Anspruch 19, bei der die Einrichtung zum Bestimmen defekter Bildelemente eine Vergleichseinrichtung zum Vergleichen des ersten Referenzsignals eines jeweiligen Bildelements mit einem ersten Schwellenwert und zum Vergleichen des zweiten Referenzsignals des jeweiligen Bildelements mit einem zweiten Schwellenwert aufweist.

21. Vorrichtung gemäß Anspruch 20, die ferner Mittelwertbildungseinrichtungen zum Bilden eines Mittelwerts aus allen ersten Referenzsignalen als ersten Schwellenwert und zum Bilden eines Mittelwerts aus allen zweiten Referenzsignalen als zweiten Schwellenwert aufweist.

22. Vorrichtung gemäß einem der Ansprüche 19 bis 21, bei der die Einrichtung zum Erzeugen eines Bilds eine Einrichtung zum Erzeugen eines jeweiligen Ausgangssignals für ein jeweiliges Effektivbildelement (100, 200) durch das Bilden eines Mittelwerts aus Objektsignalen von den nicht als defekt bestimmten Bildelementen dieses Effektivbildelements aufweist.

23. Vorrichtung gemäß einem der Ansprüche 19 bis 22, die ferner eine Einrichtung zum Bewerten, ob ein einem jeweiligen Bildelement zugeordnetes Objektsignal anzeigt, daß das Bildelement direkt von einem Röntgenquant getroffen wurde, aufweist, wobei solche Bildelemente, die von einem Röntgenquant getroffen wurden, beim Erzeugen des Bilds nicht berücksichtigt werden.

24. Vorrichtung gemäß einem der Ansprüche 19 bis 23, die ferner folgende Merkmale aufweist:

eine Korrektureinrichtung zur Korrektur der Objektsignale, um Schwankungen der Objektsignale der einzelnen Bildelemente des Sensorarrays aufgrund des Dunkelstroms derselben, aufgrund eines unterschiedlichen Umwandlungswirkungsgrads derselben und aufgrund von Inhomogenitäten der Szintillatorschicht zu kompensieren; und

eine Temperatursteuereinrichtung zum Halten des Sensor-arrays auf einer konstanten Temperatur.

25. Vorrichtung gemäß einem der Ansprüche 19 bis 24, bei der die Einrichtung zum Bestimmen defekter Bildelemente diese auf der Grundlage erster Referenzsignale, die erfaßt werden, wenn das Sensorarray keiner Röntgenstrahlung ausgesetzt ist, und auf der Grundlage zweiter Referenzsignale, die erfaßt werden, wenn das Sensorarray einrer homogenen Röntgenstrahlung ausgesetzt ist, bestimmt.

26. Vorrichtung zur digitalen dentalen Radioskopie mit folgenden Merkmalen:

einer Röntgenstrahlungsquelle; und

einem Sensorarray, auf das eine Szintillatorschicht aufgebracht ist,

**dadurch gekennzeichnet, daß**

die einzelnen Bildelemente (1 bis 25, 51, 52, 53) des Sensorarrays kleiner sind als eine gewünschte Ortsauflösung, so daß eine Mehrzahl von Bildelementen (1 bis 25) jeweils ein Effektivbildelement (100, 200) bilden;

eine Einrichtung zum Bewerten, ob ein Objektsignal eines jeweiligen Bildelements (51) anzeigt, ob das Bildelement direkt von einem Röntgenquant getroffen wurde, auf der Grundlage von zumindest für benachbarte Bildelemente (52, 53) erfaßten Signalen vorgesehen ist; und

eine Einrichtung zum Erzeugen eines Bilds unter Verwendung lediglich der Objektsignale, die nicht anzeigen, daß das zugehörige Bildelement direkt von einem Röntgenquant getroffen wurde, vorgesehen ist.

27. Vorrichtung gemäß Anspruch 26, bei der die Einrichtung zum Bewerten eine Einrichtung zum Bilden eines Mittelwerts aus den zumindest den benachbarten Bildelementen zugeordneten Objektsignalen und eine Einrichtung zum Vergleichen des Mittelwerts mit dem zu bewertenden Objektsignal aufweist.

28. Vorrichtung gemäß Anspruch 27, bei der die Einrichtung zum Bilden eines Mittelwerts eine Einrichtung zum Bilden eines Mittelwerts aus den Objektsignalen, die an dieses Bildelement (51) angrenzenden Nachbarbildelementen (52) zugeordnet sind, oder eines Mittelwert aus den Objektsignalen, die den Nachbarbildelementen (52) und den an die Nachbarbildelemente angrenzenden Bildelementen (53) zugeordnet sind, aufweist.

29. Vorrichtung gemäß einem der Ansprüche 26 bis 28, bei der die Einrichtung zum Erzeugen eines Bilds eine Einrichtung zum Erzeugen eines jeweiligen Ausgangssignals für ein jeweiliges Effektivbildelement durch das Bilden eines Mittelwerts aus den Objektsignalen dieses Effektivbildelements, die nicht anzeigen, daß das zugehörige Bildelement direkt durch ein Röntgenquant getroffen wurde, aufweist.

30. Vorrichtung gemäß einem der Ansprüche 26 bis 29, die ferner folgende Merkmale aufweist:

eine Korrektureinrichtung zur Korrektur der Objektsignale, um Schwankungen der Objektsignale der einzelnen Bildelemente des Sensorarrays aufgrund des Dunkelstroms derselben, aufgrund eines unterschiedlichen Umwandlungswirkungsgrads derselben und aufgrund von Inhomogenitäten der Szintillatorschicht zu kompensieren; und

eine Temperatursteuereinrichtung zum Halten der Temperatur des Sensorarrays auf einer konstanten Temperatur.

**Claims**

1. A method for imaging in digital dental radioscopy making use of a sensor array, the individual image elements (1 to 25, 51, 52, 53) of which are smaller than a desired local resolution, so that a plurality of image elements (1 to 25) forms a respective effective image element (100, 200), comprising the steps of:

a) detecting first reference signals which are generated by the image elements of the sensor array when said sensor array is not exposed to X-radiation;

b) detecting second reference signals which are generated by the image elements of the sensor array when said sensor array is exposed to X-radiation;

c) determining defective image elements (7, 19) on the basis of the detected first and second reference signals; and

d) detecting third electric signals which are generated by the image elements of the sensor array when said sensor array is exposed to an X-radiation representative of an image of an object; and

e) producing the image by forming a respective output signal for the respective effective image elements (100, 200) using exclusively those third electric signals which are generated by image elements of the effective image element that have been determined as being non-defective.

2. A method according to claim 1, wherein the image elements determined as being defective in step c) are image elements whose first reference signal exceeds a first threshold value to a predetermined degree or whose second reference signal is lower than a second threshold value by a predetermined degree.

3. A method according to claim 2, wherein the first predetermined threshold value is formed from all first reference signals by averaging and wherein the second predetermined threshold value is formed from all second reference signals by averaging.

4. A method according to claim 3, wherein said first predetermined threshold value and said second predetermined threshold value are each formed by averaging first and second reference signals obtained during repeated execution of steps a) and b).

5. A method according to one of the claims 1 to 4, wherein steps a), b) and c) are each carried out periodically, when steps d) and e) have been carried out a certain number of times.

6. A method according to claim 1, wherein the output signal for a respective effective image element (100, 200) is formed by averaging the third electric signals of the image elements of the effective image element.

7. A method according to claim 1, wherein, after step d), an additional assessment step d1) is carried out for assessing whether a third signal detected for a respective image element indicates that said image element has been hit directly by an X-ray quantum, said step d1) being carried out on the basis of third signals which have been detected at least for neighbouring image elements; and wherein in step e) only those third electric signals are used which have been determined as being non-defective and the assessment of which showed that they have not been hit directly by an X-ray quantum.

8. A method according to claim 7, wherein in step d1) an image element is assessed as having been hit directly by an X-ray quantum when the third signal detected for this image element deviates to a predetermined degree from an average of the third signals associated with at least the neighbouring image elements.

9. A method according to claim 8, wherein an image element (51) is assessed as having been hit directly by an X-ray quantum when the third signal detected for this image element deviates to a predetermined degree from an average of all third signals associated with neighbouring image elements (52) bordering on this image element (51), or from an average of all third signals associated with said neighbouring image elements (52) and the image elements (53) bordering on said neighbouring image elements.

10. A method according to one of the claims 7 to 9, wherein in step d) third electric subsignals are produced with a short exposure time in temporal succession, said subsignals being combined so as to form the respective third electric signals, said step d1) being carried out for each of the third electric subsignals.

11. A method according to one of the claims 1 to 10, wherein the sensor array is controlled to a constant temperature during steps a), b) and d), said method comprising additionally the following step:
correcting the third electric signals on the basis of the first and second reference signals so as to compensate fluctuations of said third electric signals of the individual image elements caused by the dark current of these elements, by different conversion efficiencies of these elements and by inhomogeneities of a scintillation layer applied to the sensor array.

12. A method according to one of the claims 1 to 11, wherein the sensor array is exposed to homogeneous X-radiation in step b).

13. A method for imaging in digital dental radioscopy making use of a sensor array having applied thereto a scintillation layer, the individual image elements (1 to 25, 51, 52, 53) of said sensor array being smaller than a desired local resolution so that a plurality of image elements (1 to 25) forms a respective effective image element (100, 200), comprising the steps of:

a) detecting electric signals which are generated by the image elements of the sensor array when said sensor array is exposed to an X-radiation that is representative of an image of an object;

b) assessing whether a signal detected for a respective image element (51) indicates that the image element has been hit directly by an X-ray quantum, on the basis of signals which have been detected at least for neighbouring image elements (52, 53); and

c) producing an image of the object by forming a respective output signal for the respective effective image elements (100, 200) on the basis of only those electric signals which are associated with the image elements of the respective effective image element and which have been assessed as having not been hit directly by an X-ray quantum.

14. A method according to claim 13, wherein in step b) an image element is assessed as having been hit directly by an X-ray quantum when the signal detected for this image element deviates to a predetermined degree from an average of the detected electric signals associated with at least the neighbouring image elements.

15. A method according to claim 14, wherein an image element (51) is assessed as having been hit directly by an X-ray quantum when the third signal detected for this image element deviates to a predetermined degree from an average of all third signals associated with neighbouring image elements (52) bordering on this image element (51), or from an average of all third signals associated with said neighbouring image elements (52) and the image elements (53) bordering on said neighbouring image elements.

16. A method according to one of the claims 13 to 15, wherein in step a) electric subsignals are produced making use of a subexposure time in temporal succession, said subsignals being combined so as to form the respective third electric signals, said step b) being carried out for each of the third electric subsignals.

17. A method according to one of the claims 13 to 16, comprising the following steps carried out prior to step a)

a') detecting first reference signals which are generated by the image elements of the sensor array when said sensor array is not exposed to X-radiation;

a'') detecting second reference signals which are generated by the image elements of the sensor array when said sensor array is exposed to X-radiation;

wherein the sensor array is controlled to a constant temperature during steps a'), a'') and a); and correcting on the basis of the first and second reference signals the electric signals detected in step a) so as to compensate fluctuations of said detected electric signals of the individual image elements caused by the dark current of these elements, by different conversion efficiencies of these elements and by inhomogeneities of a scintillation layer applied to the sensor array.

18. A method according to claim 17, wherein the sensor array is exposed to a homogeneous X-radiation in step a'').

19. A device for digital dental radioscopy comprising:

an X-radiation source;

a sensor array having applied thereto a scintillation layer; and

means for determining defective image elements on the basis of first reference signals, which are detected by means of the sensor array when said sensor array is not exposed to X-radiation, and on the basis of second reference signals which are detected when said sensor array is exposed to X-radiation,

**characterized in that**

the individual image elements (1 to 25, 51, 52, 53) of the sensor array are smaller than a desired local resolution so that a plurality of image elements (1 to 25) forms a respective effective image element; and

that means are provided for producing an image by generating an output signal for a respective effective image element using exclusively object signals which originate from image elements that have been determined as being non-defective.

20. A device according to claim 19, wherein the means for determining defective image elements includes comparison means for comparing the first reference signal of a respective image element with a first threshold value and for comparing the second reference signal of the respective image element with a second threshold value.

21. A device according to claim 20, including in addition averaging means for forming and average from all first reference signals as a first threshold value and for taking an average from all second reference signals as a second threshold value.

22. A device according to one of the claims 19 to 21, wherein the means for producing an image includes means for generating a respective output signal for a respective effective image element (100, 200) by taking an average from object signals of those image elements of said effective image element which have been determined as being non-defective.

23. A device according to one of the claims 19 to 22, including in addition means for assessing whether an object signal associated with a respective image element indicates that the image element has been hit directly by an X-ray quantum, image elements which have been hit by an X-ray quantum being not taken into account when the image is being produced.

24. A device according to one of the claims 19 to 23, comprising in addition the following features:

a correction means for correcting the object signals so as to compensate fluctuations of the object signals of the individual image elements of the sensor array caused by the dark current of these elements, by different conversion efficiencies of these elements and by inhomogeneities of the scintillation layer; and

a temperature control means for maintaining the sensor array at a constant temperature.

25. A device according to one of the claims 19 to 24, wherein said means for determining defective image elements determines said image elements on the basis of first reference signals which are detected when said sensor array is not exposed to X-radiation, and on the basis of second reference signals which are detected when said sensor array is exposed to a homogeneous X-radiation.

26. A device for digital dental radioscopy comprising:

an X-radiation source;

a sensor array having applied thereto a scintillation layer,

**characterized in that**

the individual image elements (1 to 25, 51, 52, 53) of the sensor array are smaller than a desired local resolution so that a plurality of image elements (1 to 25) forms a respective effective image element (100, 200);

that means are provided for assessing whether an object signal of a respective image element (51) indicates whether the image element has been hit directly by an X-ray quantum, on the basis of signals detected for at least the neighbouring image elements (52, 53); and

that means are provided for producing an image using exclusively those object signals which do not indicate that the associated image element has been hit directly by an X-ray quantum.

27. A device according to claim 26, wherein said assessing means comprises means for taking an average from the object signals associated at least with the neighbouring image elements and means for comparing said average value with the object signal to be assessed.

28. A device according to claim 27, wherein said averaging means comprises means for taking an average from the object signals which are associated with neighbouring image elements (52) bordering on this image element (51), or an average from the object signals associated with said neighbouring image elements (52) and the image elements (53) bordering on said neighbouring image elements.

29. A device according to one of the claims 26 to 28, wherein said image-forming means comprises means for generating a respective output signal for a respective effective image element by taking an average from those object signals of this effective image element which do not indicate that the associated image element has been hit directly by an X-ray quantum.

30. A device according to one of the claims 26 to 29, comprising in addition the following features:

a correction means for correcting the object signals so as to compensate fluctuations of the object signals of the individual image elements of the sensor array caused by the dark current of these elements, by different conversion efficiencies of these elements and by inhomogeneities of the scintillation layer; and

a temperature control means for maintaining the temperature of the sensor array at a constant temperature.

**Revendications**

1. Procédé de génération d'image en radioscopie dentaire numérique, à l'aide d'une rangée de capteurs dont les différents éléments d'image (1 à 25, 51, 52, 53) sont inférieurs à une résolution locale souhaitée, de sorte que chacun d'une pluralité d'éléments d'image (1 à 25) forme un élément d'image effectif (100, 200), aux étapes suivantes consistant à :

a) capter des premiers signaux de référence générés par les éléments d'image de la rangée de capteurs lorsque la rangée de capteurs n'est pas soumise à une émission de rayons X;

b) capter des seconds signaux de référence générés par les éléments d'image de la rangée de capteurs lorsque la rangée de capteurs est soumise à une émission de rayons X;

c) déterminer les éléments d'image défectueux (7, 19) sur base des premiers et seconds signaux de référence captés ; et

d) capter des troisièmes signaux électriques générés par les éléments d'image de la rangée de capteurs lorsque la rangée de capteurs est soumise à une émission de rayons X représentant une image d'un objet ; et

e) générer l'image en formant un signal de sortie correspondant pour les éléments d'image effectifs (100, 200) respectifs, chaque fois à l'aide d'uniquement les troisièmes signaux électriques générés par les éléments d'image de l'élément d'image effectif qui ne sont pas déterminés comme étant défectueux.

2. Procédé selon la revendication 1, dans lequel, à l'étape c) sont déterminés comme étant défectueux les éléments d'image dont le premier signal de référence excède une première valeur de seuil d'une quantité prédéterminée ou dont le second signal de référence excède une seconde valeur de seuil d'une quantité prédéterminée.

3. Procédé selon la revendication 2, dans lequel la première valeur de seuil prédéterminée est formée par une formation de valeur moyenne de tous les premiers signaux de référence et dans lequel la seconde valeur de seuil prédéterminée est formée par une formation de valeur moyenne de tous les seconds signaux de référence.

4. Procédé selon la revendication 3, dans lequel la première valeur de seuil prédéterminée et la seconde valeur de seuil prédéterminée sont formées, chacune, par une formation de valeur moyenne de premiers et de seconds signaux de référence obtenus lors d'une réalisation répétée des étapes a) et b).

5. Procédé selon l'une des revendications 1 à 4, dans lequel les étapes a), b) et c) sont, chacune, réalisées périodiquement après que les étapes d) et e) ont été réalisées un nombre déterminé de fois.

6. Procédé selon la revendication 1, dans lequel le signal de sortie d'un élément d'image effectif (100, 200) respectif est formé par une formation de valeur moyenne des troisièmes signaux électriques des éléments d'image des éléments d'image effectifs.

7. Procédé selon la revendication 1, dans lequel est réalisée, après l'étape d), une étape d1) consistant à évaluer si un troisième signal capté pour un élément d'image respectif indique que l'élément d'image a été frappé directement par un quantum de rayons X, sur base de troisièmes signaux captés pour au moins des éléments d'image adjacents;

et dans lequel, à l'étape e) ne sont chaque fois utilisés que les troisièmes signaux électriques qui n'ont pas été déterminés comme étant défectueux et dont l'évaluation a indiqué qu'ils n'ont pas été frappés directement par un quantum de rayons X.

8. Procédé selon la revendication 7, dans lequel, à l'étape d1), un élément d'image est évalué comme étant frappé directement par un quantum de rayons X lorsque le troisième signal capté pour cet élément d'image s'écarte d'une quantité prédéterminée d'une valeur moyenne des troisièmes signaux associés au moins aux éléments d'image adjacents.

9. Procédé selon la revendication 8, dans lequel un élément d'image (51) est évalué comme étant frappé directement par un quantum de rayons X lorsque le troisième signal capté pour cet élément d'image s'écarte d'une quantité prédéterminée d'une valeur moyenne de tous les troisièmes signaux associés aux éléments d'image adjacents (52) à cet élément d'image (51) ou d'une valeur moyenne de tous les troisièmes signaux associés aux éléments d'image adjacents (52) et aux éléments d'image (53) adjacents aux éléments d'image adjacents.

10. Procédé selon l'une des revendications 7 à 9, dans lequel, à l'étape d), des troisièmes signaux électriques partiels successifs dans le temps sont générés par un court temps d'exposition, lesquels sont assemblés pour former les troisièmes signaux électriques correspondants, l'étape d1) étant réalisée pour chacun des troisièmes signaux électriques partiels.

11. Procédé selon l'une des revendications 1 à 10, dans lequel la rangée de capteurs est régulée, au cours des étapes a), b) et d), à une température constante et présentant, par ailleurs, l'étape suivante consistant à:

corriger les troisièmes signaux électriques sur base des premiers et des seconds signaux de référence, afin de compenser les variations des troisièmes signaux électriques des différents éléments d'image sur base du courant obscur de ceux-ci, sur base d'un rendement de conversion différent de ceux-ci et sur base de non-homogénéités d'une couche de scintillation appliquée sur la rangée de capteurs.

**12.** Procédé selon l'une des revendications 1 à 11, dans lequel la rangée de capteurs est soumise, à l'étape b), à une émission de rayons X homogène.

**13.** Procédé de génération d'image en radioscopie dentaire numérique, à l'aide d'une rangée de capteurs sur laquelle est appliquée une couche de scintillation, les différents éléments d'image (1 à 25, 51, 52, 53) étant inférieurs à une résolution locale souhaitée, de sorte que chacun d'une pluralité d'éléments d'image (1 à 25) forme un élément d'image effectif (100, 200), aux étapes suivantes consistant à:

a) capter des signaux électriques générés par les éléments d'image de la rangée de capteurs lorsque la rangée de capteurs est soumise à une émission de rayons X représentant une image d'un objet;
b) évaluer si un signal capté pour un élément d'image (51) respectif indique que l'élément d'image a été frappé directement par un quantum de rayons X, sur base de signaux captés pour au moins des éléments d'image (52, 53) adjacents;
c) générer une image de l'objet en formant un signal de sortie correspondant pour les éléments d'image effectifs (100, 200) respectifs sur base uniquement des signaux électriques associés aux éléments d'image de l'élément d'image effectif correspondant évalués comme n'ayant pas été frappés directement par un quantum de rayons X.

**14.** Procédé selon la revendication 13, dans lequel, à l'étape b), un élément d'image est évalué comme ayant été frappé directement par un quantum de rayons X lorsque le signal capté pour cet élément d'image s'écarte d'une quantité prédéterminée d'une valeur moyenne des signaux électriques captés associés au moins aux éléments d'image adjacents.

**15.** Procédé selon la revendication 14, dans lequel un élément d'image (51) est évalué comme ayant été frappé directement par un quantum de rayons X lorsque le troisième signal capté pour cet élément d'image s'écarte d'une quantité prédéterminée d'une valeur moyenne de tous les troisièmes signaux associés aux éléments d'image adjacents (52) à cet élément d'image (51) ou d'une valeur moyenne de tous les troisièmes signaux associés aux éléments d'image adjacents (52) et aux éléments d'image (53) adjacents aux éléments d'image adjacents.

**16.** Procédé selon l'une des revendications 13 à 15, dans lequel, à l'étape a), des signaux électriques partiels successifs dans le temps sont générés à l'aide d'un temps d'exposition d'image partielle, lesquels sont assemblés pour former les troisièmes signaux électriques correspondants, l'étape b) étant réalisée pour chacun des troisièmes signaux électriques partiels.

**17.** Procédé selon l'une des revendications 13 à 15, présentant, avant l'étape a), les étapes suivantes consistant à:

a') capter des premiers signaux de référence générés par les éléments d'image de la rangée de capteurs lorsque la rangée de capteurs n'est pas soumise à une émission de rayons X;
a") capter des seconds signaux de référence générés par les éléments d'image de la rangée de capteurs lorsque la rangée de capteurs est soumise à une émission de rayons X;

la rangée de capteurs étant réglée, au cours des étapes a'), a") et a) à une température constante ; et
les signaux électriques captés à l'étape a) étant corrigés sur base des premiers et des seconds signaux de référence, afin de compenser les variations des signaux électriques captés des différents éléments d'image sur base du courant obscur de ceux-ci, sur base d'un rendement de conversion différent de ceux-ci et sur base de non-homogénéités d'une couche de scintillation appliquée sur la rangée de capteurs.

**18.** Procédé selon la revendication 17, dans lequel la rangée de capteurs est soumise, à l'étape a"), à une émission de rayons X homogène.

**19.** Dispositif de radioscopie dentaire digitale, aux caractéristiques suivantes :

une source d'émission de rayons X;
une rangée de capteurs sur laquelle est appliquée une couche de scintillation; et
un dispositif destiné à déterminer des éléments d'image défectueux sur base de premiers signaux de référence captés à l'aide de la rangée de capteurs lorsque la rangée de capteurs n'est pas soumise à une émission de rayons X et sur base de seconds signaux de référence captés lorsque la rangée de capteurs est soumise à une émission de rayons X,

**caractérisé par le fait que**

les différents éléments d'image (1 à 25, 51, 52, 53) de la rangée de capteurs sont inférieurs à une résolution locale souhaitée, de sorte que chacun d'une pluralité d'éléments d'image (1 à 25) forme un élément d'image effectif, et qu'il est prévu un dispositif destiné à générer une image en générant un signal de sortie pour un élément d'image effectif respectif uniquement à l'aide de signaux d'objet provenant d'éléments d'image déterminés comme n'étant pas défectueux.

20. Dispositif selon la revendication 19, dans lequel le dispositif destiné à déterminer des éléments d'image défectueux présente un dispositif de comparaison destiné à comparer le premier signal de référence d'un élément d'image respectif à une première valeur de seuil et à comparer le second signal de référence de l'élément d'image respectif à une seconde valeur de seuil.

21. Dispositif selon la revendication 20, présentant, par ailleurs, des dispositifs de formation de valeur moyenne destinés à former, comme première valeur de seuil, une valeur moyenne à partir de tous les premiers signaux de référence et pour former, comme seconde valeur de seuil, une valeur moyenne à partir de tous les seconds signaux de référence.

22. Dispositif selon l'une des revendications 19 à 21, dans lequel le dispositif de génération d'une image présente un dispositif pour générer un signal de sortie correspondant pour un élément d'image effectif (100, 200) respectif en formant une valeur moyenne à partir de signaux d'objet des éléments d'image de cet élément d'image effectif évalués non déterminés comme étant défectueux.

23. Dispositif selon l'une des revendications 19 à 22, présentant, par ailleurs, un dispositif pour évaluer si un signal d'objet associé à un élément d'image correspondant indique que l'élément d'image a été frappé directement par un quantum de rayons X, de tels éléments d'image ayant été frappés par un quantum de rayons X n'étant pas pris en considération lors de la génération de l'image.

24. Dispositif selon l'une des revendications 19 à 23, présentant, par ailleurs, les caractéristiques suivantes:

un dispositif de correction destiné à corriger les signaux d'objet, afin de compenser les variations des signaux d'objet des différents éléments d'image de la rangée de capteurs sur base du courant obscur de ceux-ci, sur base d'un rendement de conversion différent de ceux-ci et sur base de non-homogénéités de la couche de scintillation ; et

un dispositif de régulation de température destiné à maintenir la rangée de capteurs à une température constante.

25. Dispositif selon l'une des revendications 19 à 24, dans lequel le dispositif destiné à déterminer des éléments d'image défectueux détermine ceux-ci sur base de premiers signaux de référence captés lorsque la rangée de capteurs n'est pas soumise à une émission de rayons X et sur base de seconds signaux de référence captés lorsque la rangée de capteurs est soumise à une émission de rayons X homogène.

26. Dispositif de radioscopie dentaire digitale, aux caractéristiques suivantes :

une source d'émission de rayons X ; et
une rangée de capteurs sur laquelle est appliquée une couche de scintillation;

**caractérisé par le fait que**

les différents éléments d'image (1 à 25, 51, 52, 53) de la rangée de capteurs sont inférieurs à une résolution locale souhaitée, de sorte que chacun d'une pluralité d'éléments d'image (1 à 25) forme un élément d'image effectif (100, 200);
un dispositif destiné à évaluer si un signal d'objet d'un élément d'image (51) respectif indique si l'élément d'image a été frappé directement par un quantum de rayons X, sur base au moins de signaux captés pour des éléments d'image (52, 53) adjacents; et
qu'il est prévu un dispositif destiné à générer une image à l'aide uniquement des signaux d'objet n'indiquant pas que l'élément d'image correspondant a été frappé directement par un quantum de rayons X.

27. Dispositif selon la revendication 26, dans lequel le dispositif d'évaluation présente un dispositif pour former une valeur moyenne à partir des signaux d'objet associés au moins aux éléments d'image adjacents et un dispositif pour comparer la valeur moyenne au signal d'objet à évaluer.

28. Dispositif selon la revendication 27, dans lequel le dispositif de formation d'une valeur moyenne présente un dispositif pour former une valeur moyenne à partir des signaux d'objet associés aux éléments d'image (52) adjacents à cet élément d'image (51) ou une valeur moyenne à partir des signaux d'objet adjacents aux éléments d'image adjacents (52) et aux éléments d'image (53) adjacents aux éléments d'image adjacents.

**29.** Dispositif selon l'une des revendications 26 à 28, dans lequel le dispositif de génération d'une image présente un dispositif pour générer un signal de sortie correspondant pour un élément d'image effectif respectif en formant une valeur moyenne à partir des signaux d'objet de cet élément d'image effectif n'indiquant pas que l'élément d'image correspondant a été frappé directement par un quantum de rayons X.

**30.** Dispositif selon l'une des revendications 26 à 29, présentant, par ailleurs, les caractéristiques suivantes:

un dispositif de correction destiné à corriger les signaux d'objet, afin de compenser les variations des signaux d'objet des différents éléments d'image de la rangée de capteurs sur base du courant obscur de ceux-ci, sur base d'un rendement de conversion différent de ceux-ci et sur base de non-homogénéités de la couche de scintillation ; et
un dispositif de régulation de température destiné à maintenir la rangée de capteurs à une température constante.

100

| 1 | 2 | 3 | 4 | 5 |
|---|---|---|---|---|
| 6 | 7 | 8 | 9 | 10 |
| 11 | 12 | 13 | 14 | 15 |
| 16 | 17 | 18 | 19 | 20 |
| 21 | 22 | 23 | 24 | 25 |

| 1 | 2 | 3 | 4 | 5 |
|---|---|---|---|---|
| 6 | 7 | 8 | 9 | 10 |
| 11 | 12 | 13 | 14 | 15 |
| 16 | 17 | 18 | 19 | 20 |
| 21 | 22 | 23 | 24 | 25 |

200

| 53 | 53 | 53 | 53 | 53 |
|----|----|----|----|----|
| 53 | 52 | 52 | 52 | 53 |
| 53 | 52 | 51 | 52 | 53 |
| 53 | 52 | 52 | 52 | 53 |
| 53 | 53 | 53 | 53 | 53 |

FIGUR